**Europäisches Patentamt**

**European Patent Office**

**Office européen des brevets**

(11) Veröffentlichungsnummer : **0 063 182**
**B1**

(12) # EUROPÄISCHE PATENTSCHRIFT

(45) Veröffentlichungstag der Patentschrift :
**20.02.85**

(21) Anmeldenummer : **81110478.5**

(22) Anmeldetag : **16.12.81**

(51) Int. Cl.⁴ : **C 21 C   5/50, F 16 H 57/02**

(54) **Kippantrieb für metallurgische Gefässe, insbesondere Stahlwerkskonverterkippantrieb.**

(30) Priorität : **18.04.81 DE 3115821**

(43) Veröffentlichungstag der Anmeldung :
**27.10.82 Patentblatt 82/43**

(45) Bekanntmachung des Hinweises auf die Patenterteilung : **20.02.85 Patentblatt 85/08**

(84) Benannte Vertragsstaaten :
**AT BE FR GB IT LU NL**

(56) Entgegenhaltungen :
**DE-A- 1 650 848**
**DE-A- 2 104 705**
**DE-A- 2 554 912**
*DE-A- 2 654 907*
*DE-A- 2 658 885*

(73) Patentinhaber : **MANNESMANN Aktiengesellschaft**
**Mannesmannufer 2**
**D-4000 Düsseldorf 1 (DE)**

(72) Erfinder : **Ackermann, Wilhelm**
**Grieperstrasse 49**
**D-4300 Essen 1 (DE)**
Erfinder : **Langlitz, Karlheinz**
**Tinkrathstrasse 74**
**D-4330 Mülheim (DE)**

EP 0 063 182 B1

**Beschreibung**

Die Erfindung betrifft einen Kippantrieb für metallurgische Gefäße, insbesondere einen Stahlwerkskonverterkippantrieb, dessen Großzahnrad innerhalb eines Gehäuses drehfest auf dem das Gehäuse tragenden Kippzapfen angeordnet ist, mit dem Großzahnrad zugeordnete, an einer Verdrehung um die Abtriebswelle gehinderte Untersetzungsgetriebe, deren auf der Abtriebswelle drehfesten Ritzel jeweils mit dem Großzahnrad in Eingriff stehen sowie mit ein- und ausschaltbaren Bremsen.

Derlei Antriebe werden seit einigen Jahren als auf dem Konverterkippzapfen reitende Getriebe (auch als sogenannte fliegende Antriebe bezeichnet) ausgeführt. Wesentliches Merkmal eines solchen Kippantriebs ist die Obertragung der Antriebskraft von einem oder mehreren stationären Elektromotoren auf zwei oder mehr als zwei Zahnritzel, die in das Großzahnrad eingreifen. Die Aufteilung der Antriebskraft in mehrere kleine Teilantriebskräfte führt zu Steuerungsproblemen der Elektromotoren, da die angetriebenen Zahnritzel ihre Teilantriebskraft jeweils synchron auf das Großzahnrad übertragen müssen.

Die Übertragung von Teilantriebskräften erfolgt sowohl im dynamischen als auch im statischen Betrieb des Antriebes, wobei der statische Betrieb die Abstützung von Kräften aus Unwucht und Schwingungen während einer zeitlich unveränderlichen Kippstellung des Gefäßes bedeutet, in der die Bremsen des Kippantriebs eingeschaltet sind.

Sowohl im dynamischen als auch im statischen Betrieb des Kippantriebs kommt es im Antriebsfluß hinter den Bremsen noch zu unkontrollierbaren Bewegungen, die meist ihre Ursachen in Fertigungstoleranzen des Großzahnrades und der Zahnritzel sowie auch der vorgeschalteten Untersetzungsgetriebe, Kupplungen und dergleichen haben, wobei sich insbesondere im dynamischen Betrieb, d. h. bei ausgeschalteten Bremsen, alle Zahnspiele der Zahnräder und Kupplungen einschließlich derjenigen im Untersetzungsgetriebe addieren.

Im statischen Betrieb resultieren Schwingungen während der Frischperiode aus den Reaktionen im Metallbad. Diese Schwingungen übertragen sich auf Ausmauerung und Wandung des Konvertergefäßes. Für den Fall, daß sich das Konvertergefäß auf einen Tragring stützt, der mittels der Kippzapfen in einem Kippgestell gelagert ist, gelangen die Schwingungen über die Stützelemente zwischen Konverterwandung und Tragring über den Tragring in die Kippzapfen und schließlich in das Kippzapfen-Großzahnrad und in die Zahnritzel, die die Antriebskraft auf das Kippzapfen-Großzahnrad übertragen. Die Schwingungen sind insbesondere am Zahneingriff des Kippzapfen-Großzahnrades mit dem Zahnritzel schädlich (DE-AS 26 58 885).

Gemäß den in der Literatur wiedergegebenen Angaben zum statischen Betrieb treten, bezogen auf die Tiegelmündung, Nickbewegungen bis zu (±) 50 mm auf (DE-AS 25 54 912).

Im dynamischen Betrieb treten Schwingungen auf, die durch das Zahnspiel am Großzahnrad, am Zahnritzel und dem Zahnspiel zwischen den Zahnrädern der Untersetzungsgetriebe bedingt sind. Ein synchroner Antrieb der Zahnritzel wird zwar angestrebt, ein solcher Antrieb ist jedoch steuerungstechnisch nur sehr schwierig oder überhaupt nicht zu bewirken. Der Grund hierfür liegt in den jeweils unterschiedlichen Drehwinkeln eines Elektromotors pro Zeiteinheit. Eine Regelung sämtlicher einzelner Elektromotoren kommt nicht in Betracht, weil der erforderliche technische Aufwand das Ergebnis nicht rechtfertigt. Für einen synchronen Lauf der Zahnritzel müßte ein gleichbleibendes Drehmoment vom Elektromotor abgegeben werden.

Eine Steuerung der einzelnen Elektromotoren in Abhängigkeit der Winkelstellungen der jeweils den anderen Einzelantrieben zugehörigen Zahnritzel ist ebenfalls aufwendig und vergrößert den Anteil der Elektrik eines Kippantriebes für metallurgische Gefäße.

Eine Steuerung der einzelnen Elektromotoren in Abhängigkeit von einem (oder mehreren) Elektromotor(en) ist kompliziert und aufwendig, und eine Anpassung der Drehmomente der beiden Zahnritzel wird nur näherungsweise erreicht.

Der vorliegenden Erfindung liegt die Aufgabe zugrunde, den Kippantrieb für metallurgische Gefäße im dynamischen Betrieb mechanisch vor Eigenschwingungen zu schützen und den Antrieb mechanisch außerdem so auszubilden, daß er auch im statischen Betrieb for Fremdschwingungen geschützt werden kann.

Die gestellte Aufgabe wird aufgrund des eingangs bezeichneten Kippantriebs dadurch gelöst, daß zwischen je einer Welle zumindest zweier, ein Differentialgetriebe bildender Untersetzungsgetriebe eine die beiden Wellen mit auf einen Festwert eingestellten oder einstellbaren Abstand verbindende Drehmomentausgleichsvorrichtung vorgesehen ist. Diese Drehmomentausgleichsvorrichtung überträgt überschüssiges Drehmoment von der ersten Welle auf die zweite Welle, deren Drehmoment gegenüber der ersten Welle einen niedrigeren Wert aufweist. Dadurch verhindert die Drehmomentausgleichsvorrichtung ein Voreilen oder Zurückbleiben des ersten Zahnritzels im Schwenkwinkel gegenüber dem zweiten Zahnritzel oder umgekehrt. Die Drehmomentausgleichsvorrichtung arbeitet demgemäß als eine Zwangssynchronisation. Die erfindungsgemäße Drehmomentausgleichsvorrichtung bewirkt somit während des Laufes Winkelverstellungen der einzelnen Wellen, die sich drehen, in Überlagerung.

Die Drehmomentausgleichsvorrichtung läßt sich in verschiedenen Ausführungsformen verwirklichen. Eine bevorzugte Ausführungsform besteht darin, daß aus jedem Untersetzungsgetriebegehäuse vorstehende Wellenstümpfe der
mindestens zwei Untersetzungsgetriebe mit
drehfesten Hebeln verbunden sind, deren Hebelenden mit einem Zug-Druck-Glied in Verbindung
stehen. Das Zug-Druck-Glied nimmt die aus den
Drehmomenten resultierenden Kräften bei verschiedenen Drehrichtungen auf.

In Weiterbildung der Erfindung ist vorgesehen,
daß das Zug-Druck-Glied aus einer auf Zug- und
Druckkräfte beanspruchbaren Stange besteht,
die an die Hebelenden mit jeweils einem Stangenende gelenkig angeschlossen ist.

In Erfüllung des weitergehenden Teils der
gestellten Aufgabe wird vorgeschlagen, daß die
Drehmomentausgleichsvorrichtung mit einer
Festsetzvorrichtung für die Zahnritzel in bezug
auf das Großzahnrad kombiniert ist. Der erfindungsgemäße Kippantrieb vermag demzufolge
Eigen- und Fremdschwingungen aufzufangen,
ohne daß es zu den gefürchteten Brüchen an den
Verzahnungen kommt.

Die beschriebene Drehmomentausgleichsvorrichtung für den dynamischen Betrieb des
Kippantriebs wird dabei dahingehend weitergebildet, daß das Zug-Druck-Glied über den wirksamen Abstand der miteinander verbundenen Hebel
verlängert und an ein Geradschubtriebwerk angeschlossen ist, dessen die Reaktionskräfte aufnehmendes Element ortsfest ist. Bei Betätigung
des Geradschubtriebwerkes wird eine Verschwenkung der Hebel bis zur Anlage des einzelnen Zahnritzels an die Verzahnung des Großzahnrades bewirkt, wobei die Bremsen eingeschaltet sind (statischer Betrieb).

Das elektrisch (elektromagnetisch), hydraulisch
oder pneumatisch betätigte Geradschubtriebwerk ist so angeordnet, daß das die Reaktionskräfte aufnehmende, ortsfeste Element
am Großzahnradgehäuse oder an einem der Untersetzungsgetriebegehäuse befestigt ist.

Eine weitere Verbesserung der Synchronisation der Zahnritzel kann außerdem noch dadurch
erzielt werden, indem die mittels der Drehmomentausgleichsvorrichtung über deren Wellen
starr verbundenen Untersetzungsgetriebe von einem oder mehreren Elektromotoren angetrieben
werden, wobei die Getriebewellen miteinander
gekoppelt sind. Die Kopplung der einzelnen Elektromotoren verfolgt den Zweck, die in einem
Getriebezug zu synchronisierende Kraftkette so
kurz wie möglich zu gestalten. Durch die Kopplung der einzelnen Elektromotoren wird die
Synchronisationsstrecke auf den Getriebezug
des Untersetzungsgetriebes beschränkt.

Die Verbindung der einzelnen Elektromotoren
kann auch dadurch geschaffen werden, indem
diese über einen durchgehenden Antriebsstrang
miteinander verbunden sind.

Mehrere Ausführungsbeispiele der Erfindung
sind in der Zeichnung dargestellt und werden im
folgenden näher beschrieben. Es zeigen

Figur 1 die Stirnansicht des erfindungsgemäßen Kippantriebs für einen Stahlwerkskonverter als Beispiel für ein metallurgisches Gefäß,

Figur 2 einen Schnitt II-II wie in Fig. 1 eingezeichnet in schematisierter Darstellung, wobei
die Untersetzungsgetriebe in die Zeichenebene
verlegt dargestellt sind,

Figur 3 ein gegenüber Fig. 1 verändertes Ausführungsbeispiel des erfindungsgemäßen
Kippantriebs,

Figur 4 ein weiteres gegenüber den Fig. 1 und
3 verändertes Ausführungsbeispiel des erfindungsgemäßen Kippantriebs.

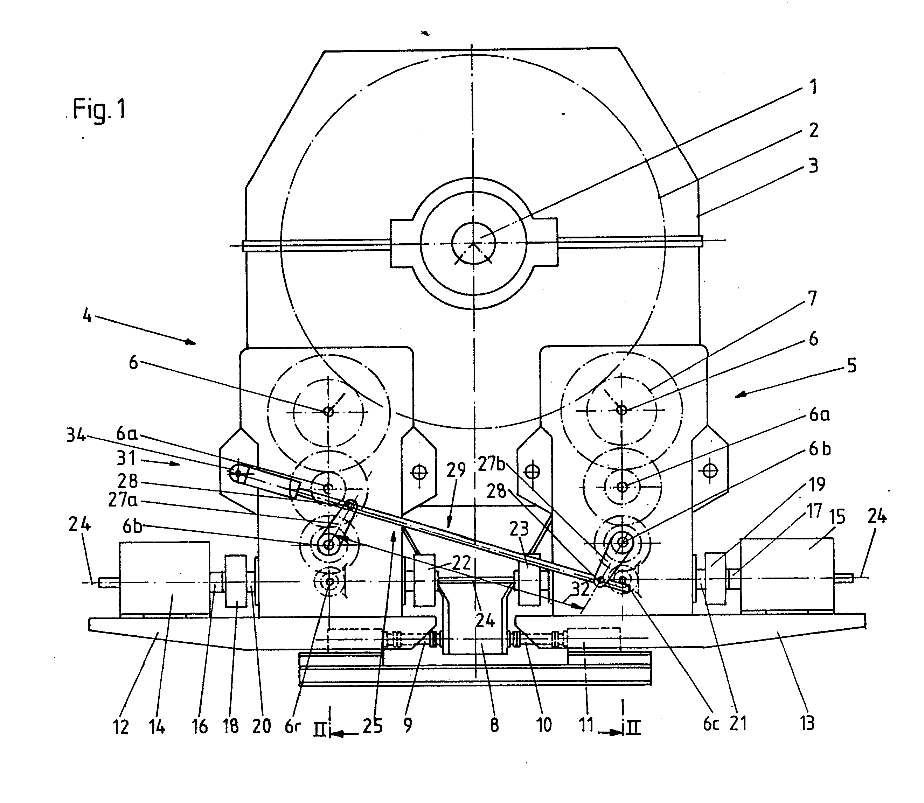

Ein weiter nicht dargestelltes metallurgisches
Gefäß wird mittels zweier Kippzapfen 1 gehalten
(von denen nur einer sichtbar ist) und aufgrund
des in den Fig. 1 bis 4 dargestellten Kippantriebs
in die im Betrieb notwendigen Kippstellungen
zwischen 0° und 360° gekippt.

Der Kippantrieb weist das Großzahnrad 2 auf,
das innerhalb des Gehäuses 3 drehfest auf dem
Kippzapfen 1 gelagert ist. Dem Großzahnrad 2
sind die Untersetzungsgetriebe 4 und 5 zugeordnet. Jedes der Untersetzungsgetriebe 4, 5, die
gleich ausgeführt sind, besitzt eine Abtriebswelle
6, auf der ein in das Großzahnrad 2 greifendes
Zahnritzel 7 drehfest angeordnet ist. Jedes der
Untersetzungsgetriebe 4 bzw. 5 ist ferner an dem
Gehäuse 3 festgemacht oder durch eine (nicht
dargestellte) Drehmomentstütze an einer Verdrehung um die Achse der Abtriebswelle 6 gehindert.
Ebenso ist das Gehäuse 3 mittels der Drehmomentstütze 8 gefedert oder ungefedert zwischen
den ortsfesten kugelförmigen Konsolpratzen 9
und 10 derart angeordnet, daß auch bei vorgespannten Federn 11 der Kippzapfen 1 vertikale
Bewegungen sowie senkrecht zur Zeichenebene
gerichtete Schubbewegungen und Verschränkungen (Schrägstellungen) begrenzt ungehindert ausführen kann, wobei bei Drehrichtungsumkehr keinerlei Stoßbelastungen an der
Drehmomentstütze 8 auftreten.

Die Untersetzungsgetriebe 4 bzw. 5 tragen Konsolen 12 und 13, auf denen die Elektromotoren 14
und 15 (Gleichstrom- oder Drehstromantriebe)
aufgesetzt und über die Motorenwellen 16 und 17
sowie die Bremsen 18 und 19 und die Getriebewellen 20 und 21 sowie über die Kupplungen 22
und 23 einen einzigen Antriebsstrang 24 bilden.

Die Untersetzungsgetriebe 4 bzw. 5 weisen
neben der Abtriebswelle 6 jeweils weitere Wellen
6a, 6b, 6c je nach der Anzahl der vorhandenen
Untersetzungsstufen auf. Die Untersetzungsgetriebe 4 bzw. 5 sind außer durch die Getriebewellen
20, 21 durch die Drehmomentausgleichsvorrichtung 25 miteinander verbunden.

Die Drehmomentausgleichsvorrichtung 25
kann — wie dargestellt — zwischen gleichen
Stufen der Untersetzungsgetriebe, die ein Differentialgetriebe bilden, d. h. zwischen den Wellen
6b/6b eingesetzt werden. Auf den Wellenstümpfen 26 sind Hebel 27a bzw. 27b drehfest angeordnet. An ihren Hebelenden 28 ist ein Zug-Druck-
Glied 29, bestehend aus einer zug- und knickfesten Stange 30 mit ihren Stangenenden 30a bzw.
30b angelenkt. Sobald das von den einzelnen
Elektromotoren 14 bzw. 15 übertragene Drehmoment an den Wellenstümpfen 26 auf der Seite eines der Untersetzungsgetriebe 4,5 überwiegt, wird der überschüssige Anteil auf den jeweils anderen Wellenstumpf 26 übertragen, wodurch ständig eine Anlage der Zähne in Richtung des Kraftflusses von den Zahnritzeln 7 in das Großzahnrad 2 bewirkt wird. Mit diesem Drehmomentausgleich können die schädlichen Eigenschwingungen im dynamischen Betrieb unterdrückt werden, so daß die gefürchteten Beschädigungen der Zähne ausbleiben.

Für den statischen Betrieb ist an die Drehmomentausgleichsvorrichtung 25 eine Festsetzvorrichtung 31 angeschlossen. Hierzu ist über den festen Abstand 32, der von dem einen wirksamen Hebelende 28 zu dem anderen wirksamen Hebelende 28 gemessen wird, das Zug-Druck-Glied 29 verlängert und die Verlängerungsstange 33 an ein elektromagnetisches, pneumatisches oder hydraulisches Geradschubtriebwerk 34 angelenkt. Das die Reaktionskräfte aufnehmende Element 35 (Stator, Zylinder oder dgl.) ist ortsfest und am Gehäuse 3 des Großzahnrades 2 oder an einem der Untersetzungsgetriebegehäuse 4a bzw. 5a befestigt.

Bei Betätigung des Geradschubwerkes 34 wird durch Vor- oder Zurückschieben der Verlängerungsstange 33 das Zug-Druck-Glied 29 verspannt, wodurch eine Bewegung der auf den Wellen 6b, 6b befindlichen Zahnräder nach Überwindung des bestehenden Zahnspiels gehemmt wird. Zusätzlich sind im stationären Betrieb die Bremsen 18 und 19 eingeschaltet, so daß im Getriebezug zwischen den Bremsen 18 und 19 und den Zahnritzeln 7 bzw. dem Großzahnrad 2 ein Zahnspiel aufgehoben wird, das schädliche Schwingungen, während das metallurgische Gefäß sich in einem Ruhezustand befindet, verursachen könnte.

Das Zug-Druck-Glied 29 kann auch in hydraulischer Wirkungsweise aus zwei doppelt beaufschlagbaren Kolben-Zylinder-Antrieben bestehen, deren analoge Druckräume mittels Hydraulikleitungen miteinander verbunden sind.

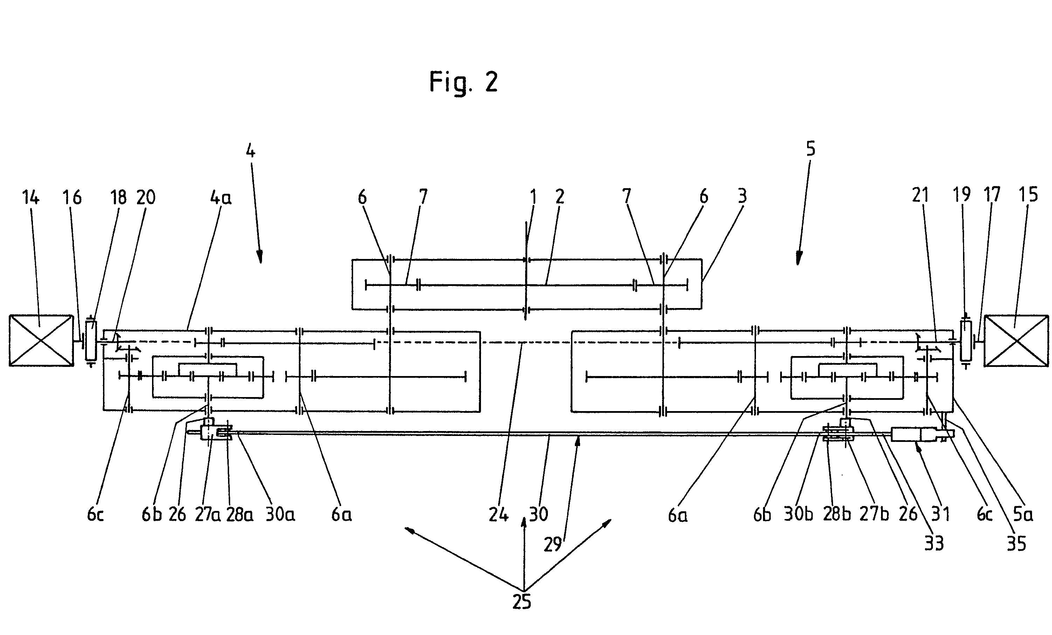

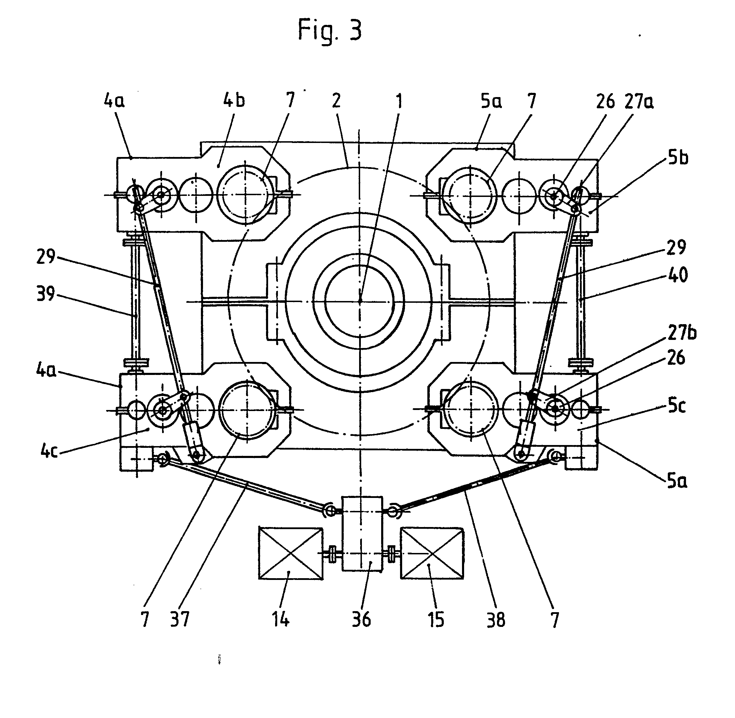

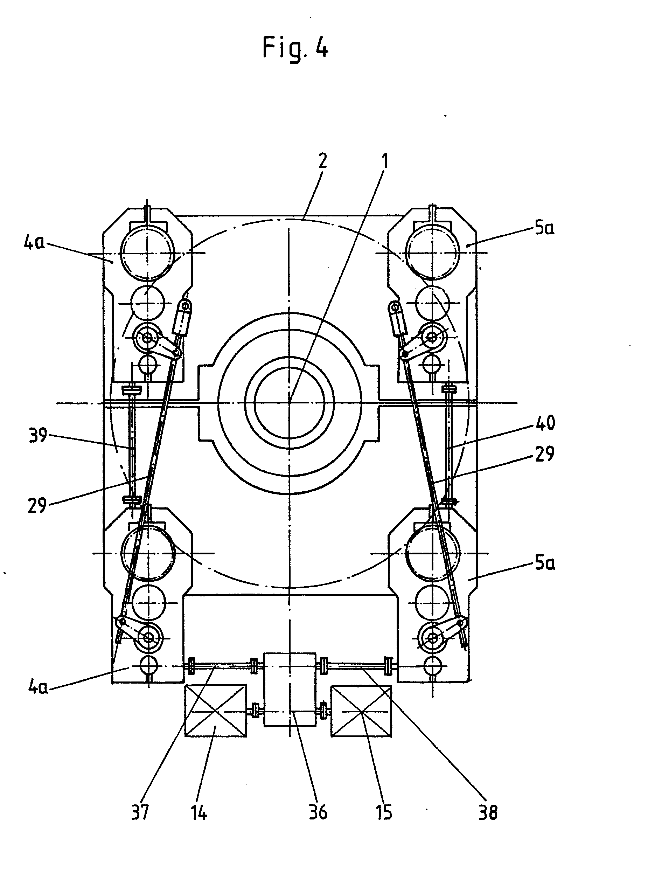

Die Erfindung läßt sich außerdem gemäß den Ausführungsbeispielen der Fig. 3 und 4 verwirklichen. In einer zweiten Ausführungsform (Fig. 3) sind um das Großzahnrad 2 die Untersetzungsgetriebe 4b, 4c bzw. 5b, 5c angeordnet, die jeweils mit ihrem Zahnritzel 7 in das Großzahnrad 2 eingreifen. Die einzelnen Elektromotoren 14 bzw. 15 treiben auf das Differentialgetriebe 36, das aus einem einfachen Kegelrad-Differentialgetriebe besteht (währenddem die durch die Untersetzungsgetriebe 4 bzw. 5 gebildeten Differentialgetriebe aus Planetengetriebestufen gebildet werden, die paarweise zusammen die Differentialstufe ergeben). Das Drehmoment der Elektromotoren 14, 15 wird hinter dem Differentialgetriebe 36 mittels der Gelenkwellen 37 und 38 bzw. 39 und 40 auf die Untersetzungsgetriebe 4b und 5b weitergeleitet. Die Untersetzungsgetriebe 4b, 4c sowie 5b und 5c sind in der Art der in Fig. 2 dargestellten Untersetzungsgetriebe 4 und 5 gestaltet. Auch die Hebel 27a, 27b sind an den Wellenstümpfen 26 angelenkt.

Bei der mehr horizontalen Erstreckung der Untersetzungsgetriebegehäuse 4a, 5a verlaufen die Zug-Druck-Glieder 29 in der vetikal-schrägen Richtung, wodurch sich eine zahnspielfreie Anordnung von vier Zahnritzeln 7 erreichen läßt.

Gemäß einer dritten Ausführungsform (Fig. 4) ergibt sich bei mehr vertikaler Erstreckung der Untersetzungsgetriebegehäuse 4a, 5a ein ähnlicher Verlauf der Zug-Druck-Glieder 29.

**Ansprüche**

1. Kippantrieb für metallurgische Gefäße, dessen Großzahnrad innerhalb eines Gehäuses drehfest auf dem das Gehäuse tragenden Kippzapfen angeordnet ist, mit dem Großzahnrad zugeordnete, an einer Verdrehung um die Abtriebswelle gehinderte Untersetzungsgetriebe, deren auf der Abtriebswelle drehfesten Zahnritzel jeweils mit dem Großzahnrad in Eingriff stehen, sowie mit ein- und ausschaltbaren Bremsen, dadurch gekennzeichnet, daß zwischen je einer Welle (6 bis 6c) zumindest zweier, ein Differentialgetriebe bildender Untersetzungsgetriebe (4, 5) eine die beiden Wellen (6, 6 ; 6a ; 6b, 6b ; 6c, 6c) mit auf einen Festwert eingestellten oder einstellbare Abstand (32) verbindende Drehmomentausgleichsvorrichtung (25) vorgesehen ist.

2. Kippantrieb nach Anspruch 1, dadurch gekennzeichnet, daß aus jedem Untersetzungsgetriebegehäuse (4, 5) vorstehende Wellenstümpfe (26) mindestens zwei Untersetzungsgetriebe (4, 5) mit drehfesten Hebeln (27a, 27b) verbunden sind, deren Hebelenden (28) mit einem Zug-Druck-Glied (29) in Verbindung stehen.

3. Kippantrieb nach den Ansprüchen 1 und 2, dadurch gekennzeichnet, daß das Zug-Druck-Glied (29) aus einer auf Zug- und Druckkräfte beanspruchbaren Stange (30) besteht, die an die Hebelenden (28) mit jeweils einem Stangenende (30a, 30b) gelenkig angeschlossen ist.

4. Kippantrieb nach Anspruch 1, dadurch gekennzeichnet, daß die Drehmomentausgleichsvorrichtung (25) mit einer Festsetzvorrichtung (31) für die Zahnritzel (7) in bezug auf das Großzahnrad (2) kombiniert ist.

5. Kippantrieb nach Anspruch 4, dadurch gekennzeichnet, daß das Zug-Druck-Glied (29) über den wirksamen Abstand (32) der miteinander verbundenen Hebel (27a, 27b) verlängert und an ein Geradschubtriebwerk (34) angeschlossen ist, dessen die Reaktionskräfte aufnehmendes Element (35) ortsfest ist.

6. Kippantrieb nach den Ansprüchen 1, 4 und 5, dadurch gekennzeichnet, daß das die Reaktionskräfte aufnehmende, ortsfeste Element (35) am Großzahnradgehäuse (3) oder an einem der Untersetzungsgetriebegehäuse (4a, 5a) befestigt ist.

7. Kippantrieb nach einem oder mehreren der Ansprüche 1 bis 6, dadurch gekennzeichnet, daß die mittels der Drehmomentausgleichsvorrichtung (25) über deren Wellen (6b, 6b) starr verbundenen Untersetzungsgetriebe (4, 5) von einem oder von mehreren Elektromotoren (14, 15) antreibbar sind wobei die Getriebewellen (20, 21) miteinander gekoppelt sind.

8. Kippantrieb nach Anspruch 7, dadurch gekennzeichnet, daß die einzelnen Elektromotoren (14, 15) über einen durchgehenden Antriebsstrang (24) miteinander verbunden sind.

## Claims

1. Tilting gear for metallurgical vessels whose large gear, inside a housing, is fixed on the tilting trunnion carrying the housing, complete with large gear, reduction gearings prevented from turning on the output shafts, gear pinions of the reduction gearings fixed on the output shaft and engaging the large gear, as well as cut-in and cutout type brakes, characterized by a torque compensation gear (25) being provided between each shaft (6 to 6c) of at least two reduction gearings (4, 5) forming a differential gearing to connect the two shafts (6, 6 ; 6a, 6a ; 6b, 6b ; 6c, 6c) at a spacing (32) that is either fixed or adjustable.

2. Tilting gear according to claim 1, characterized by shaft ends (26) projecting from each reduction gear casing (4, 5) of at least two reduction gearings (4, 5) being connected with fixed levers (27a, 27b) and the lever ends (28) being connected with a pull-push element (29).

3. Tilting gear according to claims 1 and 2, characterized by the pull-push element (29) consisting of a bar (30) that can be subjected to tension and compression forces, the ends of the bar (30a, 30b) being connected to the lever ends (28) so as to articulate.

4. Tilting gear according to claim 1, characterized by the torque compensation gear (25) being combined with a fixing device (31) for the gear pinions (7) with respect to the large gear (2).

5. Tilting gear according to claim 4, characterized by the pull-push element (29) being extended over the effective distance (32) of the interconnected levers (27a, 27b) and connected to a straight thrust gear (34) that has a stationary element (35) to receive the reaction forces.

6. Tilting gear according to claims 1, 4 and 5, characterized by the stationary element (35) receiving the reaction forces being fixed to the large gear casing (3) or to one of the reduction gear casings (4a, 5a).

7. Tilting gear according to one or several of the claims 1 to 6, characterized by the reduction gearings (4, 5) rigidly connected through shafts (6a, 6b) via the torque compensation gear (25) being powered from one or several electric motors (14, 15) and the gear shafts (20, 21) being coupled.

8. Tilting gear according to claim 7, characterized by the individual electric motors (14, 15) being connected through a continuous drive shafting (24).

## Revendications

1. Commande de basculement pour cuves métallurgiques, dont la grande roue dentée à l'intérieur d'un carter est montée fixe sur le tourillon de basculement portant le carter, avec réducteurs correspondants ne pouvant tourner autour de leur arbre de sortie, dont le pignon denté respectif monté fixe sur cet arbre engrène dans la grande roue dentée, ainsi qu'avec freins embrayables et débrayables, caractérisée, en ce qu'entre chacun des arbres (6 à 6a) d'au moins deux réducteurs (4, 5) formant une transmission différentielle est prévu un dispositif d'égalisation de couple (25) reliant les deux arbres (6,6 ; 6b, 6b ; 6c, 6c) avec un écartement (32) réglable ou réglé sur une valeur fixe.

2. Commande de basculement suivant revendication 1, caractérisée en ce que des bouts d'arbre (26) sortant de chaque carter de réducteur (4, 5) et appartenant aux deux réducteurs (4, 5) au moins sont reliés par des leviers (27a, 27b) dont les extrémités (28) sont en liaison avec un élément traction-poussée (29).

3. Commande de basculement suivant revendications 1 et 2 caractérisée en ce que l'élément traction-poussée (29) est constitué d'une barre (30) sollicitable en traction et en poussée articulée par chacune de ses extrémités (30a, 30b) sur les extrémités de leviers (28).

4. Commande de basculement suivant revendication 1, caractérisée en ce que le dispositif d'égalisation de couple (25) est combiné avec un dispositif d'immobilisation (31) pour les pignons dentés (7) par rapport à la grande roue dentée (2).

5. Commande de basculement suivant revendication 4, caractérisée en ce que l'élément traction-poussée (29) est prolongée par l'écartement de travail (32) des leviers (27a, 27b) reliés entre eux et raccordé à un mécanisme de poussée (34) dont l'élément (35) de reprise des réactions est fixe.

6. Commande de basculement suivant revendications 1, 4 et 5, caractérisée en ce que l'élément fixe (35) de reprise des réactions est fixé sur le carter (3) de la grande roue dentée ou sur le carter (4a, 5a) de l'un des réducteurs.

7. Commande de basculement suivant revendications 1 à 6, caractérisée en ce que les réducteurs (4, 5) reliés rigidement par l'intermédiaire de leurs arbres (6b, 6b), au moyen du dispositif d'égalisation de couple (25), peuvent être entraînés par un ou plusieurs moteurs électriques (14, 15), les arbres (20, 21) de réducteur étant accouplés entre eux.

8. Commande de basculement suivant revendication 7, caractérisée en ce que les moteurs électriques (14, 15) sont reliés entre eux par l'intermédiaire d'une ligne d'entraînement (24).

Fig. 1

# Fig. 2

0 063 182

## Fig. 3

# Fig. 4